**Europäisches Patentamt**

**European Patent Office**

**Office européen des brevets**

(19)

(11) Veröffentlichungsnummer: **0 283 763**
**B1**

(12) **EUROPÄISCHE PATENTSCHRIFT**

(45) Veröffentlichungstag der Patentschrift:
18.07.90

(51) Int. Cl.⁵: **F02G 5/04, F02B 63/04**

(21) Anmeldenummer: **88102988.8**

(22) Anmeldetag: **29.02.88**

(54) **Kraft-Wärme-Kopplungsanlage.**

(30) Priorität: **16.03.87 DE 3708238**

(43) Veröffentlichungstag der Anmeldung:
**28.09.88 Patentblatt 88/39**

(45) Bekanntmachung des Hinweises auf die Patenterteilung:
**18.07.90 Patentblatt 90/29**

(84) Benannte Vertragsstaaten:
**CH DE FR GB LI NL**

(56) Entgegenhaltungen:
**DE-A- 1 476 538**
**FR-A- 2 397 532**
**US-A- 4 393 656**

**Dubbel: Taschenbuch für den Maschinenbau, 14.**
**Auflage, 1981, Springer Verlag, Seite 696, Bild 6**

(73) Patentinhaber: **Motoren-Werke Mannheim**
**Aktiengesellschaft vorm. Benz Abt. stationärer**
**Motorenbau, Carl-Benz-Strasse 5,**
**D-6800 Mannheim 1(DE)**

(72) Erfinder: **Üründül, Celal, Lorzingstrasse 44,**
**D-6800 Mannheim(DE)**
Erfinder: **Zacharias, Friedemann, Dr., Volkerstrasse 9,**
**D-6800 Mannheim(DE)**

(74) Vertreter: **Nau, Walter, Dipl.-Ing.,**
**Klöckner-Humboldt-Deutz AG**
**Deutz-Mülheimer-Strasse 111, D-5000 Köln 80(DE)**

## Beschreibung

Die Erfindung betrifft eine Kraft-Wärme-Kopplungsanlage nach dem Oberbegriff des ersten Anspruchs.

Aus Dubbel, Taschenbuch für den Maschinenbau, 14. Auflage, 1981, Springer-Verlag, Seite 696, Bild 6 ist eine Kraft-Wärme-Kopplungsanlage mit einem Aggregatstuhl bekannt, auf dem Arbeitsmaschinen gelagert sind. Innerhalb des Aggregatstuhls sind Behälter angeordnet, durch die ein Arbeitsmedium (Kühlmittel) der Kraft-Wärme-Kopplungsanlage strömt. Der Aggregatstuhl besteht aus einem quaderförmigen Rahmen, der an allen Seiten Öffnungen hat und der an jeder Längsseite zwei parallel zu den Stirnseiten angeordnete Mittelsäulen aufweist, wobei die Behälter parallel zur Längsseite des Aggregatstuhls innerhalb der Mittelsäulen angeordnet sind. Zur Wartung, Reinigung bzw. Ersatz der Behälter werden diese in Längsrichtung, d.h. durch die Stirnseite aus dem Aggregatstuhl gezogen.

Nachteilig hieran ist, daß zum Herausnehmen der Behälter an den Stirnseiten des Aggregatstuhls ein annähernd der Länge der Behälter entsprechender Arbeitsraum vorhanden sein muß und die Behälter aufgrund Ihrer Länge eine hohe Stabilität aufweisen müssen.

Aufgabe der Erfindung ist es, eine hinsichtlich der Behälter wartungsfreundliche und kostengünstige Kraft-Wärme-Kopplungsanlage zu schaffen.

Erfindungsgemäß wird diese Aufgabe durch die kennzeichnenden Merkmale des Anspruchs 1 gelöst.

Durch diese Maßnahmen sind der Schalldämpfer und der Abgaswärmeübertrager wartungsfreundlich ausgebildet, da die jeweiligen Bauteile aufgrund ihrer Länge in noch gewichtsmäßig gut beherrschbaren Einheiten seitlich aus dem Aggregat herausnehmbar sind. Es ist somit an den Stirnseiten des Aggregatstuhls kein Manövrierraum nötig und an der Längsseite des Aggregatstuhls ist dieser auf ein Minimum beschränkt. Desweiteren bringt eine Teilung in separate Bauteile den Vorteil, daß nur das Bauteil ausgebaut zu werden braucht, welches einer Wartung bzw. Reparatur bedarf. Die einzelnen Bauteile können auch aus unterschiedlichen Materialien hergestellt sein, die entsprechend den Erfordernissen ausgewählt sind.

Die Höhe der Bauteile ist erfindungsgemäß kleiner als die Seitenöffnungen des Aggregatstuhls, so daß die Bauteile aus der Längsseite des Aggregatstuhls herausnehmbar sind.

Erfindungsgemäß besteht der Schalldämpfer aus zwei Bauteilen, von denen eines eine Reflexionskammer und das andere eine Absorptionskammer bildet. Ebenso besteht der Abgaswärmeübertrager aus zwei Bauteilen, von denen eines als Hochtemperaturbauteil und das andere als Niedertemperaturbauteil ausgebildet ist.

Beim Abgaswärmeübertrager bringt die erfindungsgemäße Teilung den Vorteil, daß man für den Hochtemperaturbauteil einfachen Stahl verwenden kann und nur im Niedertemperaturbauteil, wegen des dort anfallenden Kondensats, Edelstahl einsetzen muß. Dies ist eine bedeutende Kostenersparnis. Wie schon erwähnt, ist hier besonders die getrennte Austauschbarkeit von Vorteil.

Zweckmäßigerweise sind zwei zusammengehörende separate Bauteile, d.h. die Reflexionskammer mit der Absorptionskammer und das Niedertemperaturbauteil mit dem Hochtemperaturbauteil des Abgaswärmeübertragers durch Verbindungsstücke, welche die Mittelsäule durchragen, verbunden. Die Verbindungsstücke sind vorteilhafterweise an die Bauteile anflanschbar ausgebildet.

Um die Bauteile aus dem Aggregatstuhl herausziehen zu können, sind vorteilhafterweise an den Bauteilen Stützen angeordnet, welche in Schienen geführt sind.

Weitere Merkmale der Erfindung ergeben sich aus der Beschreibung und den Figuren, die eine Ausführungsform der Erfindung zeigen und nachfolgend beschrieben sind.

Es zeigt:

Fig. 1: eine erfindungsgemäße Kraft-Wärme-Kopplungsanlage als Seitenansicht und

Fig. 2: den zugehörigen Aggregatstuhl als Draufsicht, wobei die einzelnen separaten Bauteile herausnehmbar eingezeichnet sind.

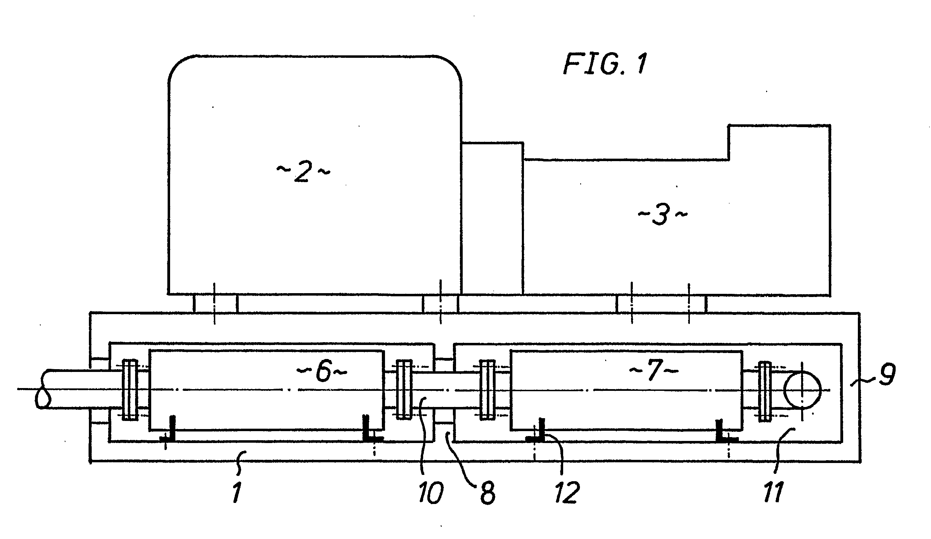

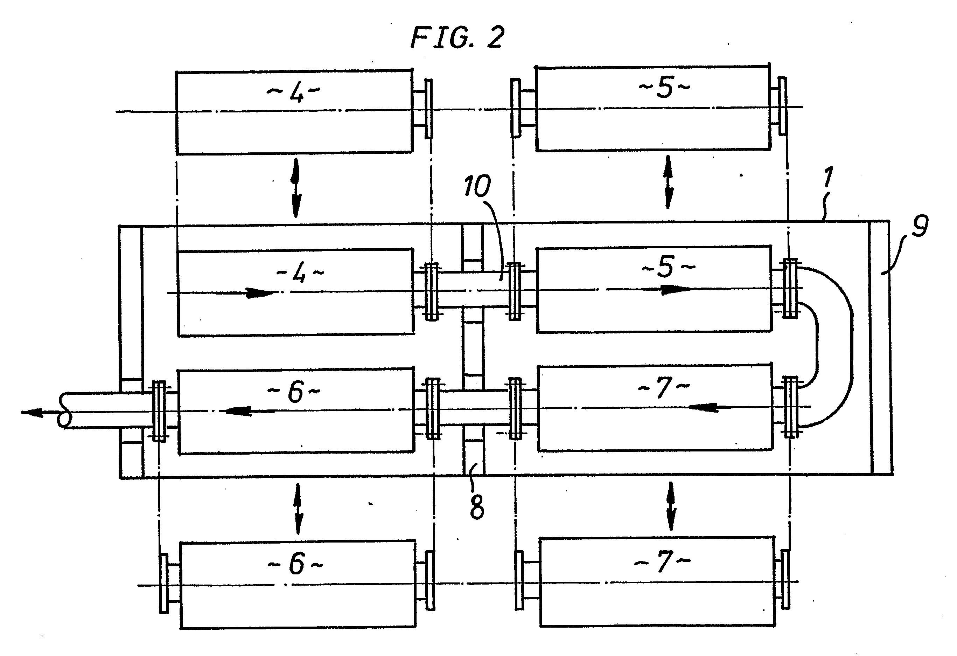

Fig. 1 zeigt eine Seitenansicht einer erfindungsgemäßen Kraft-Wärme-Kopplungsanlage. Auf einem Aggregatstuhl 1 ist ein Motor 2 und ein von diesem angetriebener Generator 3 elastisch gelagert. Der Aggregatstuhl 1 besteht aus einem quaderförmigen Rahmen, der an allen Seiten Öffnungen 11 aufweist. Zur Erhöhung der Stabilität ist der Aggregatstuhl 1 durch eine Mittelsäule 8 in zwei annähernd gleich große Teile aufgeteilt. Im Inneren des Aggregatstuhls 1 sind der Schalldämpfer 4, 5 und der Abgaswärmeübertrager 6, 7 (siehe Fig. 2) jeweils parallel zur Längsseite des Aggregatstuhls 1 angeordnet.

Erfindungsgemäß bestehen der Schalldämpfer 4, 5 und der Abgaswärmeübertrager 6, 7 aus jeweils zwei Bauteilen, die miteinander über Verbindungsstücke 10, die an den Bauteilen angeflanscht sind, verbunden sind. Diese Verbindungsstücke durchragen die Mittelsäule 8 und bestehen aus einem Rohr mit Flanschen an den jeweiligen Enden.

Fig. 2 zeigt den Aggregatstuhl 1 als Draufsicht, wobei die Bauteile herausnehmbar eingezeichnet sind, um den erfindungsgemäßen Vorteil zu zeigen. Die zwei Bauteile des Schalldämpfers 4, 5 bestehen aus einer Reflexionskammer 4 und einer Absorptionskammer 5, wobei die Absorptionskammer 5 in Strömungsrichtung hinter der Reflexionskammer 4 angeordnet ist. Die Strömungsrichtung ist in der Fig. 2 durch Pfeile angedeutet. In Strömungsrichtung hinter dem Schalldämpfer 4, 5 ist der Abgaswärmeübertrager 6, 7 angeordnet, der parallel neben dem Schalldämpfer 4, 5 liegt und vom Abgas in entgegengesetzter Richtung wie der Schalldämpfer 4, 5 durchströmt wird.

Der Abgaswärmeübertrager 6, 7 besteht ebenfalls aus zwei separaten Bauteilen, wobei das Niedertemperaturbauteil 6 in Strömungsrichtung hinter dem Hochtemperaturbauteil 7 angeordnet ist.

An den Bauteilen sind Stützen 12 angeordnet, mit welchen die Bauteile am Aggregatstuhl 1 befestigt werden. Um die Bauteile leicht aus dem Aggregatstuhl 1 herausziehen zu können, sind die Stützen 12 in Schienen geführt. Dabei kann es sich auch um eine Art Schublade handeln, die mitsamt den Bauteilen aus dem Aggregatstuhl 1 herausgezogen wird.

Die erfindungsgemäße Anordnung liefert eine besonders schmale, wartungsfreundliche und kostengünstige Bauart.

### Patentansprüche

1. Kraft-Wärme-Kopplungsanlage mit einem Aggregatstuhl (1), auf dem Arbeitsmaschinen (2, 3) gelagert sind und mit innerhalb des Aggregatstuhls (1) angeordneten Behältern, durch die ein Arbeitsmedium der Kraft-Wärme-Kopplungsanlage strömt und der Aggregatstuhl (1) aus einem quaderförmigen Rahmen besteht, der an allen Seiten Öffnungen hat und auf jeder Längsseite eine parallel zu den Stirnseiten angeordnete Mittelsäule (8) aufweist, wobei die Behälter parallel zur Längsseite des Aggregatstuhls innerhalb der Mittelsäulen (8) angeordnet sind, dadurch gekennzeichnet, daß die Behälter ein Schalldämpfer (4, 5) und ein Abgaswärmeübertrager (6, 7) sind und diese aus jeweils mindestens zwei durch Verbindungsstücke (10) verbundenen separaten Bauteilen bestehen, deren Länge jeweils kürzer als der Abstand zwischen Stirnseite und Mittelsäule des Aggregatstuhls ist und die Höhe der Bauteile kleiner als die Seitenöffnungen des Aggregatstuhls ist.

2. Kraft-Wärme-Kopplungsanlage nach Anspruch 1, dadurch gekennzeichnet, daß der Schalldämpfer (4, 5) aus zwei Bauteilen besteht, von denen eines eine Reflexionskammer (4) und das andere eine Absorptionskammer (5) bildet.

3. Kraft-Wärme-Kopplungsanlage nach Anspruch 1 oder 2, dadurch gekennzeichnet, daß der Abgaswärmeübertrager (6, 7) aus zwei Bauteilen besteht, von denen eines als Hochtemperaturbauteil (7) und das andere als Niedertemperaturbauteil (6) ausgebildet ist.

4. Kraft-Wärme-Kopplungsanlage nach einem der Ansprüche 1 bis 3, dadurch gekennzeichnet, daß die Verbindungsstücke (10) an die Bauteile anflanschbar ausgebildet sind.

5. Kraft-Wärme-Kopplungsanlage nach einem der Ansprüche 1 bis 4, dadurch gekennzeichnet, daß an den Bauteilen Stützen (12) angeordnet sind.

6. Kraft-Wärme-Kopplungsanlage nach Anspruch 5, dadurch gekennzeichnet, daß die Stützen (12) in Schienen geführt sind.

### Claims

1. A combined heat and power plant with a unitary bed (2) on which work machines (2, 3) are mounted and with chambers arranged inside the unitary bed (1) through which a working medium of the combined heat and power plant flows, the unitary bed (1) comprising a parallelepiped-shaped frame which has openings on all sides and which has a central column (8) on each longitudinal side parallel to the front faces whereby the chambers are arranged parallel to the longitudinal side of the unitary bed within the central columns (8), characterised in that the chambers comprise a sound absorber (4, 5) and an exhaust gas heat transmitter (6, 7), and these include, in each case, at least two separate components connected by means of connecting pieces (10), the length of which components is, in each case, shorter than the distance between the front face and the central column of the unitary bed, and the height of the components is less than the lateral openings of the unitary bed.

2. A combined heat and power plant according to claim 1, characterised in that the sound absorber (4, 5) comprises two components, one of which forms a reflection chamber (4) and the other an absorption chamber (5).

3. A combined heat and power plant according to claim 1 or 2, characterised in that the exhaust gas heat transmitter (6, 7) comprises two components, one of which is constructed as a high-temperature component (7) and the other as a low-temperature component (6).

4. A combined heat and power plant according to one of claims 1 to 3, characterised in that the connecting pieces (10) are constructed so as to be able to be flanged onto the components.

5. A combined heat and power plant according to one of claims 1 to 4, characterised in that supports (12) are arranged on the components.

6. A combined heat and power plant according to claim 5, characterised in that the supports (12) are guided on rails.

### Revendications

1. Installation pour la production couplée de chaleur et d'électricité avec un support d'organes (1) sur lequel sont montées des machines de travail (2, 3) et avec des récipients disposés à l'intérieur du support d'organes (1), à travers lesquels s'écoule un fluide de travail de l'installation pour la production couplée de chaleur et d'électricité, le support d'organes (1) étant constitué par ailleurs par un cadre de forme parallélépipèdique, qui a des ouvertures sur tous les côtés et présente sur chaque face longitudinale une colonne médiane (8) disposée parallèlement aux faces frontales, tandis que les récipients sont disposés parallèlement à la face longitudinale du support d'organes à l'intérieur des colonnes médianes (8), caractérisée en ce que les récipients constituent un amortisseur de bruit (4, 5) et un transmetteur de chaleur de gaz brûlés (6, 7), ceux-ci étant respectivement constitués par au moins deux éléments séparés par des pièces de jonction, dont la longueur est respectivement inférieure à la distance entre la face frontale et la colonne médiane du support d'organes et dont la hauteur des éléments est inférieure aux ouvertures latérales du support d'organes.

2. Installation pour la production couplée de chaleur et d'électricité selon la revendication 1, caractérisé en ce que l'amortisseur de bruit (4, 5) se compose de deux éléments dont l'un constitue une chambre de réflexion (4) et l'autre une chambre d'absorption (5).

3. Installation pour la production couplée de chaleur et d'électricité selon l'une des revendications 1 ou 2, caractérisée en ce que le transmetteur de chaleur de gaz brûlés (6, 7) comporte deux éléments dont l'un constitue la partie à haute température (7) et l'autre la partie à basse température (6).

4. Installation pour la production couplée de chaleur et d'électricité selon l'une des revendications 1 à 3, caractérisé en ce que les pièces de jonction (10) sont réalisées avec possibilité de bridage sur les éléments.

5. Installation pour la production couplée de chaleur et d'électricité selon l'une des revendications 1 à 4, caractérisée en ce que des appuis (12) sont disposés sur les éléments.

6. Installation pour la production couplée de chaleur et d'électricité selon la revendication 5, caractérisé en ce que les appuis (12) sont guidés sur des glissières.

FIG. 1

~2~

~3~

~6~

~7~

~9~

1

10

8

12

11

EP 0 283 763 B1

FIG. 2

EP 0 283 763 B1